# EUROPÄISCHE PATENTANMELDUNG

(11) **EP 2 818 782 A1**
(43) Veröffentlichungstag der Anmeldung: **31.12.2014**
(21) Anmeldenummer: 14162560.8
(22) Anmeldetag: 31.03.2014
(51) Int. Cl.: F16L 45/00, B65D 43/02

(54) **Rohrreinigungsformteil**

(30) Priorität: 28.06.2013 DE 202013102827 U
(71) Anmelder: REHAU AG + Co, 95111 Rehau (DE)
(72) Erfinder: Sieber, Jürgen, 91074 Herzogenaurach (DE); Schwarz, Thomas, 90478 Nürnberg (DE)

(57) **Zusammenfassung**

Die Erfindung betrifft ein Rohrreinigungsformteil 1 für die Zugänglichmachung des Lumens 1.4 eines Rohres oder Rohrsystems, das einen Rohrabschnitt 1.1 mit einer etwa quaderförmigen Erweiterung 1.5, die eine Öffnung aufweist, umfasst, wobei die Öffnung durch einen Dichtungsdeckel 2 verschließbar ist, das sich dadurch auszeichnet, dass der die Öffnung verschließende Dichtungsdeckel 2 mit einem Schiebesicherungselement 3 festlegbar ist.

## Beschreibung

Die Erfindung betrifft ein Rohrreinigungsformteil. Darüber hinaus betrifft die Erfindung auch ein Rohrsystem mit einem solchen Rohrreinigungsformteil.

Bei Rohren oder Rohrsystemen ist es oftmals notwendig, das Lumen zugängig zu machen, um beispielsweise Reinigungs-, Inspektions-, Wartungs- oder Reparaturarbeiten vorzunehmen. Zu diesem Zweck sind aus dem Stand der Technik Rohrreinigungsformteile bekannt, bei denen beispielsweise an einer Erweiterung der Rohrwandung eine Platte dichtend angebracht ist. Häufig sind dazu Schraubverbindungen vorgesehen, alternativ sind auch Klammern oder Hebelmechanismen bekannt.

Aus dem Stand der Technik ist dazu beispielsweise aus der Druckschrift DE 20 2009 011 126 U1 ein Rohrstück mit einer Öffnung bekannt, deren Abdeckung durch mehrere bandförmige Bügel, welche an Stegen des Abdeckung befestigbar sind.

Aus der Druckschrift DE 20 2006 012 819 U1 geht ein Rohrelement mit einer Revisionsöffnung hervor, welche mit einem Deckelelement verschließbar ist, wobei das Deckelelement mit Riegelstabelementen in der Revisionsöffnung festlegbar ist.

Diese Lösungen aus dem Stand der Technik sind aufwendig, kompliziert, durch das Vorhandensein von Kleinteilen, wie beispielsweise Schrauben, können diese verlustig gehen, darüber hinaus benötigt das Öffnen und Verschließen derartiger Rohrreinigungsformteile aus dem Stand der Technik erhebliche Zeit.

Aufgabe der vorliegenden Erfindung ist es daher, die Nachteile des Standes der Technik zu überwinden und ein Rohrreinigungsformteil bereitzustellen, welches einfach aufgebaut ist, eine geringe Anzahl von Bauteilen aufweist, sich in einfacher Weise bedienen lässt, eine hohe Wartungsfreundlichkeit und Korrosionsfestigkeit aufweist, einen sicheren Verschluss des Lumens des Rohres oder Rohrsystems gewährleistet und darüber hinaus preisgünstig ist.

Eine weitere Aufgabe der Erfindung besteht darin, ein Rohrsystem mit wenigstens einem Rohrreinigungsformteil bereitzustellen, das gegenüber dem Stand der Technik verbessert ist und die vorstehend geschilderten Nachteile überwindet.

Die Aufgabe, ein Rohrreinigungsformteil bereitzustellen, wird durch ein Rohrreinigungsformteil gemäß Anspruch 1 gelöst.

Im Rahmen der Erfindung wurde erkannt, dass ein Rohrreinigungsformteil für die Zugänglichmachung des Lumens eines Rohres oder Rohrsystems, das einen Rohrabschnitt mit einer etwa quaderförmigen Erweiterung umfasst, wobei die Erweiterung eine Öffnung aufweist und wobei die Öffnung durch einen Dichtungsdeckel verschließbar ist, dann besonders vorteilhaft ist, wenn der die Öffnung verschließende Dichtungsdeckel mit einem Schiebesicherungselement festlegbar ist.

Das Vorsehen eines Schiebesicherungselements, mit dem der die Öffnung verschließende Dichtungsdeckel des Rohrreinigungsformteils festlegbar ist, gestattet es, in sehr einfacher Weise eine sichere Abdichtung des Lumens des Rohres oder Rohrformteils zu gewährleisten, überdies ist ein solches Schiebesicherungselement sehr einfach betätigbar.

Um an das Lumen des Rohres oder Rohrsystems zu gelangen, wird das Schiebesicherungselement vom Rohrreinigungsformteil mittels einer Schiebebewegung entfernt, so dass der die Öffnung verschließende Dichtungsdeckel frei liegt, dieser wird entfernt und das Lumen des Rohres oder Rohrformteils ist zugänglich.

Als sehr vorteilhaft hat sich im Rahmen der vorliegenden Erfindung erwiesen, wenn das Schiebesicherungselement als etwa rechteckige Platte ausgebildet ist.
In anderen Ausführungsarten kann das Schiebesicherungselement auch als etwa runde oder etwa elliptische Platte ausgebildet sein.

Ein Schiebesicherungselement in Form einer etwa rechteckigen Platte ist in besonders einfacher Weise herstellbar. Hierzu ist ein vergleichsweise einfaches Werkzeug zur Herstellung notwendig, so dass insgesamt ein kostengünstiges Bauteil bereitstellbar ist.

Das Schiebesicherungselement in Form einer etwa rechteckig ausgebildeten Platte weist wenigstens eine Führungsseite mit einer Führungsfläche auf. In einer bevorzugten Ausbildung der Erfindung ist vorgesehen, dass das Schiebesicherungselement zwei Führungsseiten, eine erste Führungsseite und eine zweite Führungsseite aufweist, die jeweils mit Führungsflächen versehen sind.

Ganz besonders bevorzugt sind die beiden Führungsseiten einander gegenüberliegend, in einer ganz besonders bevorzugten Ausführung der vorliegenden Erfindung bilden die beiden Führungsseiten die beiden kurzen Seiten der etwa rechteckig ausgebildeten Platte.

Das Rohrreinigungsformteil umfasst einen Rohrabschnitt mit einer etwa quaderförmigen Erweiterung. An der etwa quaderförmigen Erweiterung ist ein Rahmen ausgebildet, der an der etwa quaderförmigen Erweiterung auf der dem Lumen des Rohrreinigungsformteils abgewandten Seite ausgebildet ist.

Der Rahmen weist wenigstens eine Rahmenführungsfläche auf. Besonders bevorzugt ist, wenn der Rahmen zwei Rahmenführungsflächen aufweist. Die zwei Rahmenführungsflächen liegen sich in einer ganz besonders bevorzugten Ausbildung der vorliegenden Erfindung gegenüber und sind parallel zueinander verlaufend.

Der Rahmen ist derart ausgebildet, dass ein Schiebesicherungselement in diesen einschiebbar ist.

Es hat sich bei der vorliegenden Erfindung als besonders günstig erwiesen, wenn das Schiebesicherungselement mit wenigstens einer Führungsseite, die eine Führungsfläche aufweist, mit einer am Rahmen der etwa quaderförmigen Erweiterung ausgebildeten Rahmenführungsfläche gleitend zusammenwirkt.
Beim Einschieben des Schiebesicherungselements in den Rahmen gleitet die wenigstens eine Führungsfläche der Führungsseite des Schiebesicherungselements an der wenigstens einen Rahmenführungsfläche des Rahmens.
Dazu sind die entsprechenden Führungsflächen und Rahmenführungsflächen entsprechend gestaltet, so dass die gleitende Zusammenwirkung stattfinden kann. Es ist auf diese Art besonders einfach möglich, das Schiebesicherungselement in den Rahmen der etwa quaderförmigen Erweiterung des Rohrabschnitts des Rohrreinigungsformteils einzuführen und in eine Endposition - bei der das Schiebesicherungselement ganz eingeschoben ist - und den Dichtungsdeckel dadurch festzulegen.

In einer äußert günstigen Fortbildung der vorliegenden Erfindung kann vorgesehen sein, dass die Führungsfläche und / oder die Rahmenführungsfläche derart gegenüber der Ebene, in der das Schiebesicherungselement eingeschoben wird, geneigt ist, dass sich das Schiebesicherungselement beim Einführen in den Rahmen der etwa quaderförmigen Erweiterung in Richtung auf das Lumen des Rohrreinigungsformteils verlagert.
Bevorzugt ist dazu die Führungsfläche und / oder die Rahmenführungsfläche gegenüber der Ebene, in der das Schiebesicherungselement in den Rahmen der etwa quaderförmigen Erweiterung einführbar ist, um einen Winkelbetrag geneigt, so dass das Schiebesicherungselement sich einen geringen Weg in Richtung auf das Lumen des Rohrreinigungsformteils zubewegt.

Hierzu kann die Führungsfläche und / oder die Rahmenführungsfläche um 1 ° bis 10° gegenüber der Einführebene geneigt sein. Besonders bevorzugt ist eine Neigung um 2.4° bis 2.6°. Dadurch wird auf den Dichtungsdeckel, derdie Öffnung in der etwa quaderförmigen Erweiterung verschließt, ein Druck ausgeübt, der solange aufrechterhalten bleibt, wie das Schiebesicherungselement im Rahmen eingeschoben bleibt. Die Dichtung des Dichtungsdeckels wird dadurch gegen eine Dichtfläche am Rahmen gedrückt. Dadurch ist der Dichtungsdeckel sicher und fluiddicht festgelegt.

Als sehr günstige Fortbildung der vorliegenden Erfindung hat sich erwiesen, wenn das Schiebesicherungselement eine erste und eine zweite Längsseite aufweist, wobei im eingeführten Zustand des Schiebesicherungselements in den Rahmen der etwa quaderförmigen Erweiterung die erste Längsseite durch einen Vorsprung des Rahmens festgelegt ist und die zweite Längsseite einen Absatz des Rahmens sichernd umgreift.

Das Schiebesicherungselement ist auf diese Weise besonders fest gegen unbeabsichtigte Verlagerungen im Rahmen der etwa quaderförmigen Erweiterung aufgenommen.

Von Vorteil kann sein, wenn am Schiebesicherungselement und am Rahmen jeweils ein beispielsweise komplementär ausgebildetes Element vorhanden ist, das in einer Art "Rastung" dem Bedienpersonal sicher zu erkennen gibt, wenn das Schiebesicherungselement komplett in den Rahmen der etwa quaderförmigen Erweiterung eingeschoben ist. Hierzu kann beispielsweise eine vorspringende Nase und eine entsprechende komplementäre Vertiefung vorteilhaft genutzt werden.

In einer weiteren sehr günstigen Fortbildung der vorliegenden Erfindung kann vorgesehen sein, dass die erste und die zweite Führungsseite des Schiebesicherungselements jeweils wenigstens zwei Abschnitte aufweisen, wobei in diesen Abschnitten unterschiedliche Längserstreckungen des Schiebesicherungselements ausgebildet sind.

Durch das Ausbilden unterschiedlicher Längserstreckungen des Schiebesicherungselements in den Abschnitten der ersten und zweiten Führungsseite des Schiebesicherungselements ergeben sich an den beiden genannten Seiten Vorsprünge, die abwechseln mit Rücksprüngen. Diese Vorsprünge und Rücksprünge der beiden Führungsseiten können vorteilhaft genutzt werden, um mit entsprechenden komplementären Strukturen am Rahmen der etwa quaderförmigen Erweiterung am Rohrreinigungsformteil zusammenzuwirken. Die entsprechenden komplementären Strukturen am Rahmen der etwa quaderförmigen Erweiterung am Rohrreinigungsformteil sind dabei so ausgebildet, dass diese im ganz eingeschobenen Zustand des Schiebesicherungselements mit den Vorsprüngen und Rücksprüngen der beiden Führungsseiten zusammenwirken und dadurch das Schiebesicherungselement festlegen.

Es gelingt hierdurch, den Weg, den das Schiebesicherungselement beim Herausziehen oder beim Hineinschieben zurückzulegen hat, deutlich zu verkürzen.
So kann beispielsweise in einer bevorzugten Ausführungsform, bei der die beiden Abschnitte am Schiebesicherungselement etwa eine gleiche Breite bei unterschiedlicher Längserstreckung aufweisen, und am Rahmen der etwa quaderförmigen Erweiterung eine dazu komplementäre Struktur vorliegt, der Weg, den das Schiebesicherungselement beim Herausziehen oder beim Hineinschieben zurückzulegen hat, auf etwa die Hälfte verkürzt werden.

Hierdurch wird der notwendige Platzbedarf am Rohrreinigungsformteil beim Öffnen und Schließen des Dichtungsdeckels verdeutlich verringert. Insbesondere in engen Schächten, in denen solche Rohrreinigungsformteile eingebaut sind, ist dieser Sachverhalt nicht zu unterschätzen.

Am Rahmen der etwa quaderförmigen Erweiterung ist in einer vorteilhaften Weiterbildung der vorliegenden Erfindung ein Halteelement ausgebildet, welches dazu dient, ein Gegenhalten auszuüben, wenn das Schiebesicherungselement aus dem Rahmen der etwa quaderförmigen Erweiterung herausgezogen oder hineingeschoben wird. Damit wird vermieden, dass sich das Rohrreinigungsformteil bei der erwähnten Bedienung des Schiebesicherungselements ungewollt verdreht.

Um ein Verdrehen des Rohrreinigungsformteiles beim Einschieben oder Herausziehen des Schiebesicherungselementes zu verhindern, kann auch eine Verdrehsicherung, z.B. in Form einer versenkbaren Metallfächerscheibe in die Muffen der Anschlussrohre eingebaut werden. Dies verkrallt sich verdrehsicher mit der äußeren Rohrwandung und der Muffeninnenseite.

In einer weiteren Fortentwicklung der vorliegenden Erfindung ist vorteilhaft vorgesehen, dass der Dichtungsdeckel eine Dichtung aufweist, die beim Verschließen der Öffnung mit einer Dichtfläche des Rahmens zusammenwirkt, wobei die die Dichtfläche begrenzenden Kanten und Ecken verrundet sind.

Bei dem Rohrreinigungsformteil gemäß vorliegender Erfindung wird eine besonders hohe Fluiddichtheit dadurch erreicht, dass der Dichtungsdeckel eine Dichtung aufweist, die beim Verschließen der Öffnung mit der Dichtfläche des Rahmens zusammenwirkt. Dadurch das die die Dichtfläche begrenzenden Kanten und Ecken verrundet sind, lässt sich die Dichtfläche in einfacher Weise reinigen und so Schmutzanhaftungen, die ggf. die Dichtwirkung negativ beeinflussen, in einfacher Weise entfernen.

Vorteilhafterweise wird die Dichtwirkung des mit einer Dichtung versehenen Dichtungsdeckels gegen die Dichtfläche des Rahmens noch dadurch gesteigert, dass das Schiebesicherungselement, nachdem es in den Rahmen der etwa quaderförmig ausgebildeten Erweiterung eingeführt ist, eine verstärkte Anpressung erfährt.

Das Rohrreinigungsformteil gemäß vorliegender Erfindung zeichnet sich in einer weiteren Fortbildung der Erfindung dadurch aus, dass am Dichtungsdeckel und / oder am Schiebesicherungselement ein Griffelement angebracht ist. Durch das Vorsehen eines Griffelements am Dichtungsdeckel und / oder am Schiebesicherungselement ist der Dichtungsdeckel bzw. das Schiebesicherungselement in besonders einfacher Weise bewegbar. So kann der Dichtungsdeckel mithilfe des Griffelements in einfacher Weise bei Reinigungsarbeiten aus dem Rohrreinigungsformteil entnommen werden und nach Durchführung der Reinigungsarbeiten wieder an seinem Ort platziert werden. Hierzu bedarf es keine Werkzeuge. Auch ist der Kraftaufwand für das Bewegen des Schiebesicherungselements gering.

Ebenso kann das Schiebesicherungselement mithilfe des Griffelements in einfacher Weise aus dem Rahmen herausgezogen werden bzw. wieder in den Rahmen eingeführt werden.

Das Rohrreinigungsformteil gemäß vorliegender Erfindung ist vorteilhafterweise derart gebildet, dass der Rohrabschnitt mit der etwa quaderförmigen Erweiterung und / oder der Dichtungsdeckel und / oder das Schiebesicherungselement ein Polymermaterial enthalten oder aus einem Polymermaterial bestehen, wobei das Polymermaterial ein Thermoplast ist, bevorzug ein Polyolefin, besonders bevorzugt ein Polypropylen oder ein Polyethylen oder ein Polybutylen, oder ein Polyvinylchlorid oder ein Polyester oder ein Polyamid.

Ein derartiges Rohrreinigungsformteil ist dadurch in einfacher Art herstellbar, kostengünstig, widerstandsfähig, rost- und korrosionsfrei, langlebig und weist ein geringes Gewicht auf. Überdies kann durch die Auswahl des Polymermaterials eine an die jeweiligen Belange angepasste Auslegung in einfacher Art erfolgen.

Mit dem erfindungsgemäßen Rohrreinigungsformteil ist eine Druckdichtheit bis 2.5 bar Überdruck realisierbar.

Durch die Verrundung der Kanten am Rohrreinigungsformteil wird die Gefahr der Beschädigung von Kabeln oder Schläuchen beim Einzug in das Rohrsystem, z.B. bei einer Kamerabefahrung oder bei einem Spülvorgang, gering.

Die Aufgabe, ein Rohrsystem mit wenigstens einem Rohrreinigungsformteil der vorliegenden Art anzugeben, erfährt ihre Lösung in Anspruch 10.

Im Rahmen der Erfindung wurde erkannt, dass es sehr günstig ist, ein Rohrsystem mit wenigstens einem Rohrreinigungsformteil, wie vorstehend beschrieben, bereitzustellen. Ein solches Rohrsystem ist durch den Einbau des erfindungsgemäßen Rohrreinigungsformteils in besonders einfacher Weise zugänglich zu machen, um beispielsweise Reinigungs-, Inspektions-, Wartungs- und Reparaturarbeiten durchzuführen.

Auf diese Weise kann leicht und ohne großen technischen Aufwand sowie kostengünstig ein Rohr oder Rohrsystem mit dem erfindungsgemäßen Rohrreinigungsformteil ausgestattet werden, wodurch das Lumen des Rohres oder Rohrsystems in einfacher Weise zugänglich wird.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Die vorliegende Erfindung wird anhand der beigefügen Figuren näher erläutert.
Hierzu zeigen:
- Fig. 1: eine Querschnittsansicht eines Rohrreinigungsformteils;
- Fig. 2: ein Rohrreinigungsformteil in einer Aufsichtsdarstellung;
- Fig. 3: einen Dichtungsdeckel in einer Aufsicht;
- Fig. 4: ein Schiebesicherungselement in einer Querschnittsansicht;
- Fig. 5: ein Schiebesicherungselement in einer Aufsicht;
- Fig. 6: eine Schiebesicherungselement in einer weiteren Aufsicht;
- Fig. 7: einen Rohrabschnitt mit einer etwa quaderförmigen Erweiterung eines Rohrreinigungsformteils in einer Querschnittsansicht;
- Fig. 8: einen Rohrabschnitt mit einer etwa quaderförmigen Erweiterung eines Rohrreinigungsformteil mit einem Dichtungsdeckel in einer Querschnittsansicht;
- Fig. 9: eine Querschnittsansicht eines Rohrreinigungsformteils;
- Fig. 10: ein Rohrreinigungsformteil in einer anderen Ausführungsart in einer Aufsicht;
- Fig. 11: ein Rohrreinigungsformteil einer anderen Ausführungsart in einer Querschnittsansicht mit einer Detaildarstellung;
- Fig. 12: ein Schiebesicherungselement einer anderen Ausführungsart in einer Querschnittsansicht.

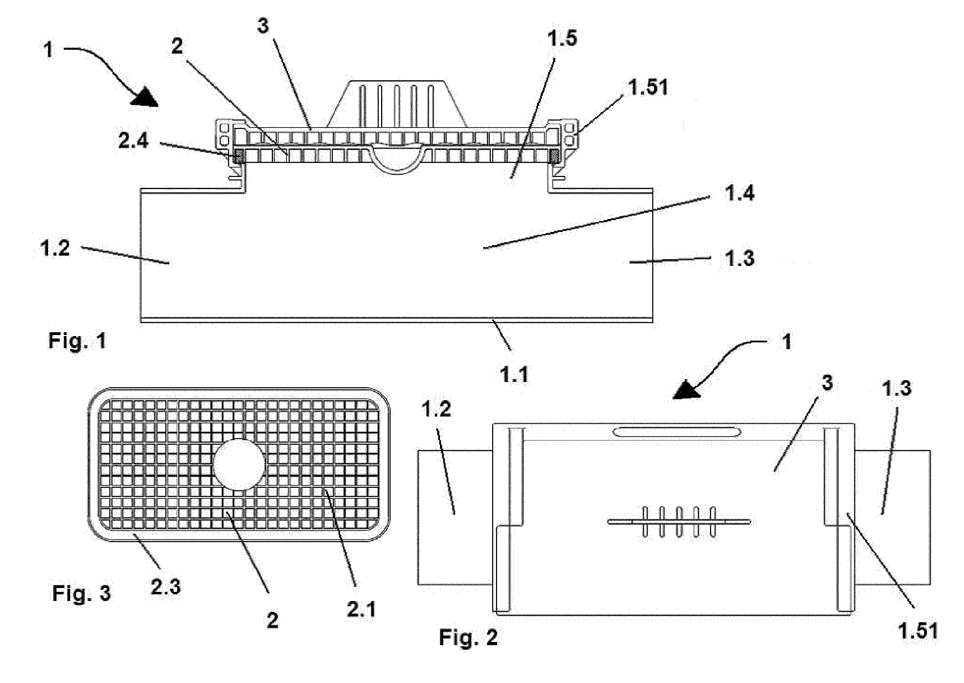

In Fig. 1 ist das erfindungsgemäße Rohrreinigungsformteil 1 in einer Querschnittsansicht gezeigt.
Das Rohrreinigungsformteil 1 umfasst einen Rohrabschnitt 1.1, der ein erstes Ende 1.2 und ein zweites Ende 1.3 aufweist, wobei an dem ersten Ende 1.2 und dem zweiten Ende 1.3 Rohre anschließbar sind. Hierzu können beispielsweise hier nicht gezeigte, angeformte Muffen oder anderweitig vorhandene Verbindungsmittel eingesetzt werden.

Der Rohrabschnitt 1.1 weist in einem Abschnitt eine etwa quaderförmige Erweiterung 1.5 auf. Die etwa quaderförmige Erweiterung 1.5 ist einstückig mit dem Rohrabschnitt 1.1 ausgebildet. Hierzu kann das etwa quaderförmige Erweiterung 1.5 und der Rohrabschnitt 1.1 gemeinsam urgeformt sein, wie dies beispielsweise in einem Spritzgussprozess erfolgt. Alternativ kann die etwa quaderförmige Erweiterung 1.5 an den Rohrabschnitt 1.1 angeschweißt sein.

Die etwa quaderförmige Erweiterung 1.5 wird von einem Rahmen 1.5.1 begrenzt und umfasst eine Öffnung, mittels der das Lumen 1.4 des Rohrreinigungsformteils 1 und damit des Rohrsystems beim Anschluss von Rohren an den Enden 1.2, 1.3 zugänglich ist.

Im Rahmen 1.5.1 der etwa quaderförmigen Erweiterung 1.5 des Rohrformteils 1 ist ein Dichtungsdeckel 2 positioniert, der eine Dichtung 2.4 aufweist, die an einer korrespondierenden Fläche der etwa quaderförmigen Erweiterung 1.5 fluiddicht anliegt.

Der Dichtungsdeckel 2 ist durch ein Schiebesicherungselement 3 derart in seiner Position gesichert, dass er sich nicht ungewollt verlagern kann.

In der vorliegenden Ausführung sind das Rohrreinigungsformteil 1, umfassend den Rohrabschnitt 1.1 mit der etwa quaderförmigen Erweiterung 1.5 sowie der Dichtungsdeckel 2 und das Schiebesicherungselement 3 aus Polypropylen in einem Spritzgussverfahren oder einem Schweißverfahren oder einem ähnlichen oder einem aus den vorgenannten kombinierten Verfahren gefertigt.

Als Dichtung 2.4 eignet sich beispielsweise eine Dichtung aus Silikonkautschuk, oder eine Dichtung auf Gummi, oder eine Dichtung aus Nitrilkautschuk (NBR), oder eine Dichtung aus SBR (Styrol-Butadien-Rubber), oder eine Dichtung aus EPDM (Ethylen-Propylen-DienKautschuk) oder eine Dichtung aus einem thermoplastischen Elastomeren, oder eine Dichtung aus thermoplastischem Polyurethan.

In Fig. 2 ist eine Aufsicht auf das Rohrreinigungsformteil 1 in einer ersten Ausführungsart gezeigt.

Das Schiebesicherungselement 3 ist dabei ganz in den Rahmen 1.5.1 eingeschoben.

In Fig. 3 ist eine Aufsicht auf die Unterseite des Dichtungsdeckels 2 gezeigt.

Der Dichtungsdeckel 2 ist etwa rechteckig ausgebildet, in einer bevorzugten Ausführungsart sind die Ecken verrundet.

Die Unterseite 2.1 des Dichtungsdeckels 2 ist zur Erhöhung der Stabilität verrippt. Am äußeren Rand des Dichtungsdeckels 2 verläuft an der Unterseite 2.1 eine Nut 2.3, wobei die Nut gesamt umlaufend ausgebildet ist. Die Nut 2.3 dient zur Aufnahme einer Dichtung 2.4.

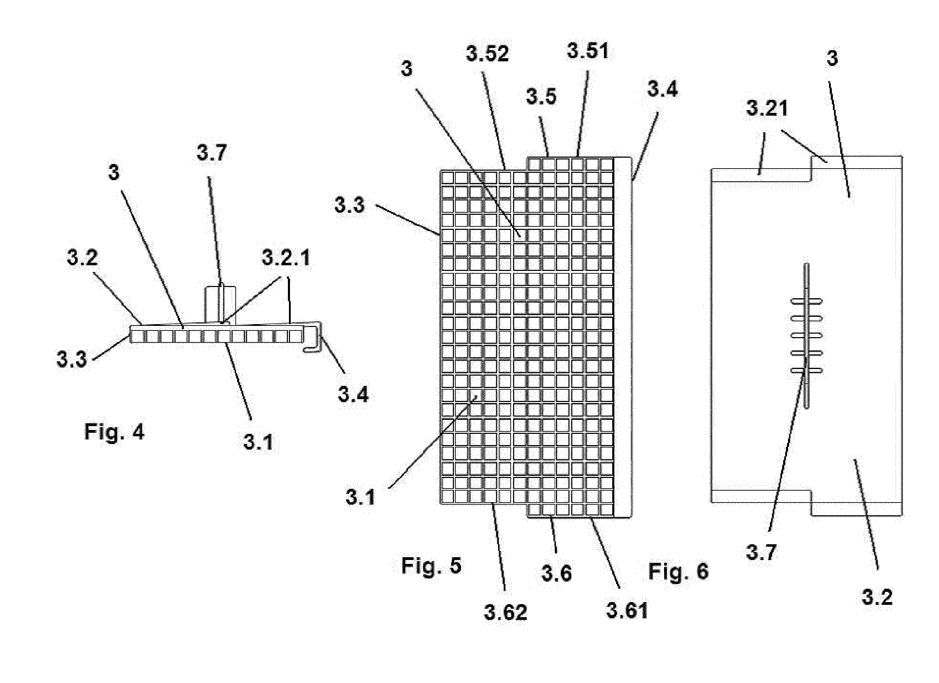

Fig. 4 zeigt eine Querschnittsansicht eines Schiebesicherungselements 3 in einer ersten Ausführungsart.

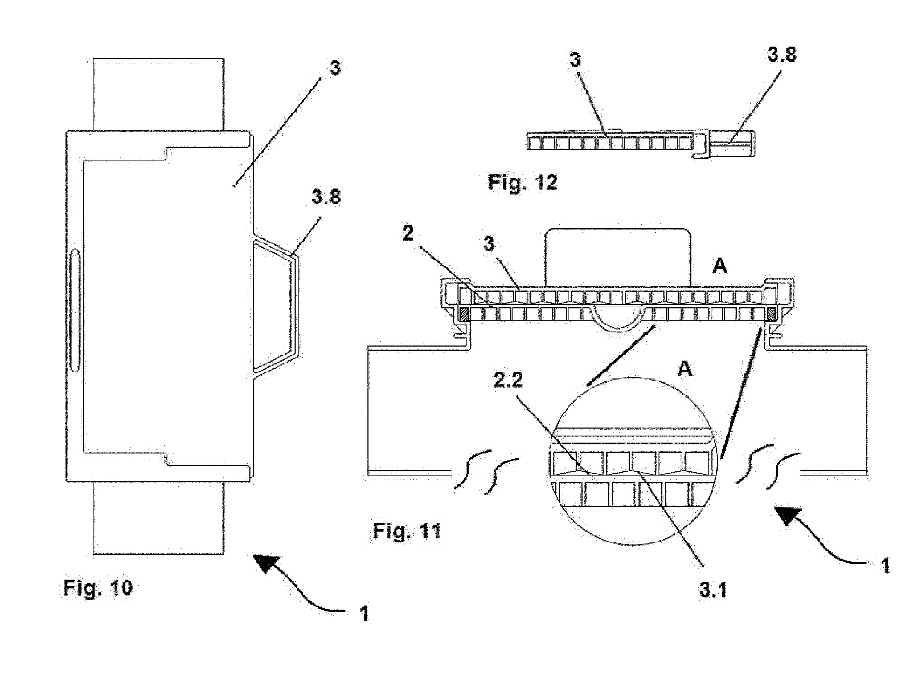

Das Schiebesicherungselement 3 weist eine Unterseite 3.1 auf, die aus Gründen der Stabilität verrippt ist. Details dazu sind in Fig. 11 genannt.
Die Unterseite 3.1 des Schiebesicherungselements 3 ist etwa als Ebene ausgebildet. An der Oberseite 3.2 des Schiebesicherungselements 3 sind Führungsflächen 3.2.1 ausgebildet, die gegenüber der Ebene, die durch die Unterseite 3.1 gebildet wird, geneigt sind. Die Neigung kann 1° bis 10° betragen, in der verwenden Ausführung beträgt die Neigung 2. 4 bis 2.6°.

Das Schiebesicherungselement 3 weist weiterhin eine erste Längsseite 3.1 und eine zweite Längsseite 3.4 auf. Die beiden Längsseiten 3.1 und 3.2 sind einander gegenüberliegend und etwa parallel zueinander angeordnet.
Die zweite Längsseite 3.4 ist derartig ausgebildet, dass diese in etwa die Form eines Hakens aufweist, wobei die Hakenspitze unterhalb der Ebene, die von der Unterseite 3.1 des Schiebesicherungselements 3 gebildet wird, zum Liegen kommt.

An der Oberseite 3.2 des Schiebesicherungselements 3 ist ein Griffelement 3.7 ausgebildet, das etwa senkrecht von der Oberseite 3.2 des Schiebesicherungselements 3 hervorsteht.

In Fig. 5 ist eine Aufsicht auf die Unterseite 3.1 des Schiebesicherungselements 3 gezeigt.

Die Unterseite 3.1 des Schiebesicherungselements 3 ist aus Stabilitätsgründen verrippt. Zu Details der Unterseite 3.1 wird auf die Figurenbeschreiben zu Fig. 11 verwiesen. Die Unterseite 3.1 des Schiebesicherungselements 3 ist etwa als Ebene ausgebildet.

Am Schiebesicherungselement 3 sind eine erste Führungsseite 3.5 und eine zweite Führungsseite 3.6 ausgebildet. Die erste Führungsseite 3.5 und die zweite Führungsseite 3.6 liegen sich gegenüber und sind etwa parallel zueinander ausgebildet. An der ersten Führungsseite 3.5 und an der zweiten Führungsseite 3.6 sind jeweils zwei Abschnitte, ein erster Abschnitt 3.51, 3.61 und ein zweiter Abschnitt 3.52 und 3.62 ausgebildet. Der erste Abschnitt zwischen der ersten Führungsseite 3.5 und der zweiten Führungsseite 3.6 weist eine größere Längserstreckung auf, als der zweite Abschnitt zwischen der ersten Führungsseite 3.5 und der zweiten Führungsseite 3.6.

Dadurch sind am ersten Abschnitt 3.51 an der ersten Führungsseite 3.5 und am ersten Abschnitt 3.61 an der zweiten Führungsseite 3.6 je ein Vorsprung ausgebildet, und am zweiten Abschnitt 3.52 der ersten Führungsseite 3.5 und am zweiten Abschnitt 3.62 der zweiten Führungsseite 3.6 entsprechend je ein Rücksprung.

In Fig. 6 ist eine Aufsicht auf die Oberseite 3.2 des Schiebesicherungselements 3 gezeigt.

An der Oberseite 3.2 des Schiebesicherungselements sind Füllungsflächen 3.2.1 ausgebildet, die mit korrespondierenden Rahmenführungsflächen 1.5.2, hier nicht gezeigt, am Rahmen 1.5.1 der etwa quaderförmigen Erweiterung 1.5 gleitend zusammenwirken.

Von der Oberfläche 3.2 des Schiebesicherungselements 3 ragt etwa senkrecht ein Griffelement 3.7 hervor.

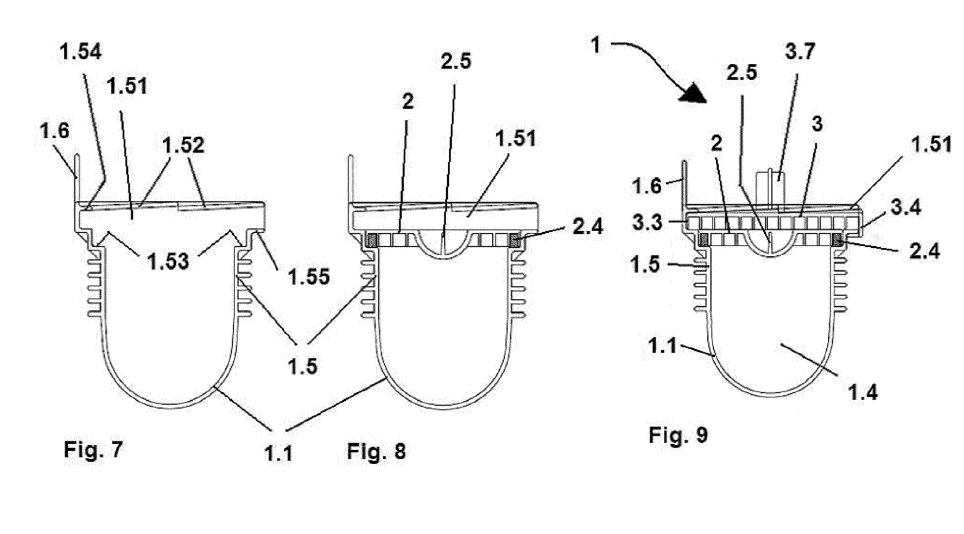

In Fig. 7 ist in einer seitlichen Querschnittsansicht der Rohrabschnitt 1.1 des Rohrreinigungsformteils 1 gezeigt.

Die etwa quaderförmigen Erweiterung 1.5 des Rohrreinigungsformteils weist eine Dichtfläche 1.53 auf, mit der die Dichtung 2.4 des Dichtungsdeckels 2 in Anlage bringbar ist.

Am Rahmen 1.5.1 der etwa quaderförmigen Erweiterung 1.5 ist ein Vorsprung 1.54 ausgebildet. Den Vorsprung 1.54 etwa gegenüberliegend weist der Rahmen 1.51 der etwa quaderförmigen Erweiterung 1.5 einen Absatz 1.55 auf. Der Rahmen 1.51 der etwa quaderförmigen Erweiterung 1.5 umfasst auch noch Rahmenführungsflächen 1.52. Nahe am Vorsprung 1.54 ist ein Halteelement 1.6 ausgebildet.

In Fig. 8 ist eine Querschnittsansicht des Rohrabschnitts 1.1 mit der etwa quaderförmigen Erweiterung 1.5 gezeigt, wobei der Dichtungsdeckel 2 eingelegt ist.

Bei eingelegtem Dichtungsdeckel 2 in die Öffnung ist die Dichtung 2.4 des Dichtungsdeckels 2 mit der Dichtfläche 1.5.3 in Anlage gebracht und dichtet das Lumen 1.4 ab.

Am Dichtungsdeckel 2 ist weiterhin ein Griffelement 2.5 ausgebildet, das bevorzugt in einer etwa mittig im Dichtungsdeckel 2 angebrachten Vertiefung ausgebildet ist.

In Fig. 9 ist ein Rohrreinigungsformteil 1 in einer weiteren Querschnittsansicht gezeigt, wobei der Schnitt gegenüber der Fig. 1 um 90° gedrehtist.

Der Rohrabschnitt 1.1 bildet zusammen mit der etwa quaderförmigen Erweiterung 1.5 ein ungefähres U-Profil. Die an der etwa quaderförmigen Erweiterung 1.5 des Rohrreinigungsformteils 1 vorhandene Öffnung wird durch einen Dichtungsdeckel 2 verschlossen. Dazu ist der Dichtungsdeckel 2 mit einer Dichtung 2.4 versehen, die eine fluiddichte Verbindung zwischen dem Dichtungsdeckel 2 und der korrespondierenden Dichtungsfläche 1.53 an der etwa quaderförmigen Erweiterung 1.5 ermöglicht.

Gesichert wird der Dichtungsdeckel 2 durch ein Schiebesicherungselement 3, das im Rahmen 1.51 der etwa quaderförmigen Erweiterung 1.5 aufgenommen ist. Am Rahmen 1.51 der etwa quaderförmigen Erweiterung 1.5 ist ein Halteelement 1.6 ausgebildet, welches dazu dient, ein Gegenhalten auszuüben, wenn das Schiebesicherungselement 3 aus dem Rahmen 1.51 der etwa quaderförmigen Erweiterung 1.5 herausgezogen oder hineingeschoben wird. Damit wird vermieden, dass sich das Rohrreinigungsformteil 1 bei der erwähnten Bedienung des Schiebesicherungselements 3 ungewollt verdreht.

Beim Einschieben des Schiebesicherungselements 3 in den Rahmen 1.5 gleitet die wenigstens eine Führungsfläche 3.21 der Führungsseite 3.5, 3.6 des Schiebesicherungselements 3 an der wenigstens einen Rahmenführungsfläche 1.52 des Rahmens 1.5.

Dazu die Führungsfläche 3.21 und / oder die Rahmenführungsfläche 1.52 gegenüber der Ebene, in der das Schiebesicherungselement 3 in den Rahmen 1.51 der etwa quaderförmigen Erweiterung 1.5 einführbar ist, um einen Winkelbetrag geneigt, so dass das Schiebesicherungselement 3 sich einen geringen Weg in Richtung auf das Lumen 1.4 des Rohrreinigungsformteils 1 zubewegt.

Wenn das Schiebesicherungselement 3 ganz im Rahmen 1.51 der etwa quaderförmigen Erweiterung 1.5 aufgenommen ist, als ganz eingeschoben ist, sichert die zweite Längsseite 3.4, die derartig ausgebildet ist, dass diese in etwa die Form eines Hakens aufweist, wobei die Hakenspitze unterhalb der Ebene, die von der Unterseite 3.1 des Schiebesicherungselements 3 gebildet wird, zum Liegen kommt, dadurch, dass der Haken den Absatz 1.55, der am Rahmen 1.51 der etwa quaderförmigen Erweiterung 1.5 ausgebildet ist, umgreift.

Dadurch kann keine ungewollte Verlagerung des Schiebesicherungselement 3, und damit auch des Dichtungsdeckels 2 weg vom Lumen 1.4 des Rohrreinigungsformteils stattfinden. Die Dichtungswirkung des Dichtungsdeckels 2 wird dadurch gesichert.
Erst durch ein Herausziehen des Schiebesicherungselement 3 aus dem Rahmen 1.51 der etwa quaderförmigen Erweiterung 1.5 wird der Dichtungsdeckel 2 zugänglich, der dann mit Hilfe des Griffelements 2.5 von der etwa quaderförmigen Erweiterung 1.5 entfernt werden kann. Die Öffnung ist dann frei und das Lumen 1.4 ist zugänglich.

Wenn das Schiebesicherungselement 3 ganz im Rahmen 1.51 der etwa quaderförmigen Erweiterung 1.5 aufgenommen ist, als ganz eingeschoben ist, sichert die erste Längsseite 3.3 dadurch, dass diese durch einen Vorsprung 1.54 des Rahmens 1.51 festgelegt ist. Dadurch kann keine ungewollte Verlagerung des Schiebesicherungselement 3, und damit auch des Dichtungsdeckels 2 weg vom Lumen 1.4 des Rohrreinigungsformteils stattfinden. Die Dichtwirkung des Dichtungsdeckels 2 wird dadurch gesichert.

Das Schiebesicherungselement 3 ist damit an allen Längs- 3.3, 3.4 und Führungsseiten 3.5, 3.6 am Rahmen 1.51 festgelegt.

Dadurch wird auf den Dichtungsdeckel 2, der die Öffnung in der etwa quaderförmigen Erweiterung 1.5 verschließt, ein Druck ausgeübt, der solange aufrechterhalten bleibt, wie das Schiebesicherungselement 3 im Rahmen 1.5 eingeschoben bleibt. Die Dichtung 2.4 des Dichtungsdeckels 2 wird auf diese Weise gegen die Dichtfläche 1.53 am Rahmen 1.51 gepresst. Dadurch ist der Dichtungsdeckel 2 sicher und fluiddicht festgelegt und dichtet das Lumen 1.4 ab.

Alle Kanten und Ecken, die die Dichtfläche 1.53 begrenzen, sind verrundet, so dass Schmutzansammlungen an diesen Stellen leicht und in einfacher Weise entfernt werden können. Mit dieser Maßnahme wird die Wartungsfreundlichkeit und die Sicherstellung der Dichtwirkung bei dem erfindungsgemäßen Rohrreinigungsformteil 1 entscheidend verbessert.

Fig. 10 zeigt in einer Aufsicht ein Rohrreinigungsformteil 1 in einer anderen Ausführungsart.

Bei dem dargestellten Rohrreinigungsformteil 1 ist das Schiebesicherungselement 3 derart gestaltet, dass das Griffelement 3.8 an einer Längsseite vorstehend als Bügelgriff ausgebildet ist.

In Fig. 11 ist eine Querschnittsansicht des Rohrreinigungsformteils 1 einer zweiten Ausführungsart gezeigt.

Der Dichtungsdeckel 2 wird dabei durch das Schiebesicherungselement 3 in seiner Position fixiert. Am Dichtungsdeckel 3 ist ein seitlich abstehendes Griffelement 3.8 als Bügelgriff ausgebildet, das hier nicht gezeigt ist.

In Fig. 11 ist noch eine Ausschnittsvergrößerung des Details A gezeigt.
Die Unterseite 3.1 des Schiebesicherungselements 3 ist verrippt, wobei die Rippen eine unterschiedliche Höhe aufweisen, so dass sich beispielsweise jeweils "hohe" und "niedrige" Rippen abwechseln. Wenn das Schiebesicherungselement 3 im Rahmen 1.51 der etwa quaderförmigen Erweiterung 1.5 bewegt wird, kommen auf diese Weise nur "hohe" Rippen mit der Oberseite 2.2 des Dichtungsdeckels 2 in Kontakt, was die Reibung zwischen der Unterseite 3.1 des Schiebesicherungselements 3 und der Oberseite 2.2 des Dichtungsdeckels 2 erheblich verringert.

In Fig. 12 ist eine Querschnittsansicht des Schiebesicherungselements 3 mit dem seitlich abstehenden Griffelement 3.8 in Form eines Bügelgriffs gezeigt.

### Bezugszeichenliste

- 1: Rohrreinigungsformteil
- 1.1: Rohrabschnitt
- 1.2: erstes Rohrende
- 1.3: zweites Rohrende
- 1.4: Lumen
- 1.5: etwa quaderförmige Erweiterung
- 1.51: Rahmen
- 1.52: Rahmenführungsfläche
- 1.53: Dichtfläche
- 1.54: Vorsprung
- 1.55: Absatz
- 1.6: Halteelement
- 2: Dichtungsdeckel
- 2.1: Unterseite
- 2.2: Oberseite
- 2.3: Nut
- 2.4: Dichtung
- 2.5: Griffelement
- 3: Schiebesicherungselement
- 3.1: Unterseite
- 3.2: Oberseite
- 3.21: Führungsfläche
- 3.3: erste Längsseite
- 3.4: zweite Längsseite
- 3.5: erste Führungsseite
- 3.51: erster Abschnitt
- 3.52: zweiter Abschnitt
- 3.6: zweite Führungsseite
- 3.61: erster Abschnitt
- 3.62: zweiter Abschnitt
- 3.7: Griffelement
- 3.8: Griffelement

## Patentansprüche

1. Rohrreinigungsformteil (1) für die Zugänglichmachung des Lumens (1.4) eines Rohres oder Rohrsystems, das einen Rohrabschnitt (1.1) mit einer etwa quaderförmigen Erweiterung (1.5), die eine Öffnung aufweist, umfasst, wobei die Öffnung durch einen Dichtungsdeckel (2) verschließbar ist, **dadurch gekennzeichnet, dass** der die Öffnung verschließende Dichtungsdeckel (2) mit einem Schiebesicherungselement (3) festleg-bar ist.

2. Rohrreinigungsformteil (1) nach Anspruch 1, **dadurch gekennzeichnet, dass** das Schiebesicherungselement (3) als etwa rechteckige oder etwa runde oder etwa elliptische Platte ausgebildet ist.

3. Rohrreinigungsformteil (1) nach Anspruch 1 oder 2, **dadurch gekennzeichnet, dass** das Schiebesicherungselement (3) wenigstens eine Führungsseite (3.5, 3.6) mit einer Führungsfläche (3.21) aufweist, die derart gestaltet ist, dass diese mit einer am Rahmen (1.51) der etwa quaderförmigen Erweiterung (1.5) ausgebildeten Rahmenführungsfläche (1.52) gleitend zusammenwirkt.

4. Rohrreinigungsformteil (1) nach Anspruch 3, **dadurch gekennzeichnet, dass** die Führungsfläche (3.21) und / oder die Rahmenführungsfläche (1.52) derart geneigt ist, dass sich das Schiebesicherungselement (3) beim Einführen in den Rahmen (1.51) der etwa quaderförmigen Erweiterung (1.5) in Richtung auf das Lumen (1.4) des Rohrreinigungsformteils (1) verlagert.

5. Rohrreinigungsformteil (1) nach einem der vorangehenden Ansprüche, **dadurch gekennzeichnet, dass** das Schiebesicherungselement (3) eine erste und ein zweite Längsseite (3.3, 3.4) aufweist, wobei im eingeführten Zustand des Schiebesicherungselements (3) in den Rahmen (1.51) der etwa quaderförmigen Erweiterung (1.5) die erste Längsseite (3.3) durch einen Vorsprung (1.54) des Rahmens (1.51) festgelegt ist und die zweite Längsseite (3.4) einen Absatz (1.55) des Rahmens (1.51) sichernd umgreift.

6. Rohrreinigungsformteil (1) nach einem der vorangehenden Ansprüche, **dadurch gekennzeichnet, dass** die erste und die zweite Führungsseite (3.5, 3.6) des Schiebesicherungselements (3) jeweils wenigstens zwei Abschnitte (3.61, 3.62) aufweisen, wobei in diesen Abschnitten (3.61, 3.62) unterschiedliche Längserstreckungen des Schiebesicherungselements (3) ausgebildet sind.

7. Rohrreinigungsformteil (1) nach einem der vorangehenden Ansprüche, **dadurch gekennzeichnet, dass** der Dichtungsdeckel (2) eine Dichtung (2.4) aufweist, die beim Verschließen der Öffnung mit einer Dichtfläche (1.53) des Rahmens (1.51) zusammenwirkt, wobei die die Dichtfläche (1.53) begrenzenden Kanten und Ecken verrundet sind.

8. Rohrreinigungsformteil (1) nach einem der vorangehenden Ansprüche, **dadurch gekennzeichnet, dass** am Dichtungsdeckel (2) und / oder am Schiebesicherungselement (3) ein Griffelement (2.5, 3.7, 3.8) und / oder am Rahmen 1.51 der etwa quaderförmigen Erweiterung 1.5 ein Halteelement 1.6 angebracht ist.

9. Rohrreinigungsformteil (1) nach einem der vorangehenden Ansprüche, **dadurch gekennzeichnet, dass** der Rohrabschnitt (1.1) mit der etwa quaderförmigen Erweiterung (1.5) und / oder der Dichtungsdeckel (2) und / oder das Schiebesicherungselement (3) ein Polymermaterial enthalten oder aus einem Polymermaterial bestehen, wobei das Polymermaterial ein Thermoplast ist, bevorzugt ein Polyolefin, besonders bevorzugt ein Polypropylen oder ein Polyethylen oder ein Polybutylen, oder ein Polyvinylchlorid, oder ein Polyester, oder ein Polyamid.

10. Rohrsystem mit wenigstens einem Rohrreinigungsformteil (1) nach einem der Ansprüche 1 bis 9.
